# EUROPEAN PATENT SPECIFICATION

(11) **EP 3 239 585 B1**
(45) Date of publication and mention of the grant of the patent: **06.03.2019**
(21) Application number: 17167941.8
(22) Date of filing: 25.04.2017
(51) Int. Cl.: F16L 55/28, F16L 55/44, E03F 7/12, F16L 101/30

(54) **SYSTEM AND METHOD FOR PIPELINE ENTRAPMENT PREVENTION**
SYSTEM UND VERFAHREN ZUR PRÄVENTION DES PIPELINE-EINSCHLUSSES
SYSTÈME ET PROCÉDÉ DE PRÉVENTION DE PIÉGEAGE DE PIPELINE

(30) Priority: 25.04.2016 NL 2016674; 03.05.2016 NL 2016725
(43) Date of publication of application: 01.11.2017
(73) Proprietor: Röntgen Technische Dienst B.V., 3046 NC Rotterdam (NL)
(72) Inventor: de Gier, Frans Cornelis, 3046 NC Rotterdam (NL); Tromp, Edwin, 3046 NC Rotterdam (NL)
(74) Representative: V.O.

(56) References cited:
- EP-A1- 1 637 833
- CA-A1- 2 476 915
- GB-A- 2 301 162
- US-A1- 2010 305 875

## Description

The invention relates to a system for travelling through a pipeline for pipeline vehicles according to the preamble of claim 1. Such as system is known from EP 1 637 833, CA 2 476 915 and US 2010/305875. The invention has as an object to prevent entrapment of pipeline vehicles in a pipeline.

Entrapment is defined as a condition in which a pipeline vehicle has become stuck in a pipeline such that it requires assistance from outside the pipeline to be retrieved.

When entrapped, the pipeline vehicle often requires substantial effort to retrieve. In some circumstances part of the pipeline has to be damaged or opened near where the pipeline vehicle is entrapped in order to provide access to the pipeline vehicle.

Entrapment of pipeline vehicles can occur during the in-line movement through the pipeline, in particular when moving from a first pipeline section into a second larger pipeline section. Entrapment can also occur in pipeline infrastructures containing multiple or branched pipelines which can be connected to a larger main pipeline, such as in tank farms. A pipeline vehicle moving in a branched pipeline close to a junction between the main pipe and the branched pipeline is especially at risk. It is common for pipeline vehicles to fall into the main pipeline and become damaged. Once in the main pipeline the branched pipeline is commonly out of reach or poorly accessible to the pipeline vehicle. This prevents the pipeline vehicle from returning back into the branched pipeline, thereby entrapping the pipeline vehicle in the main pipeline. A problem is that entrapment also commonly remains unnoticed, such as when the pipeline vehicle does not encounter a traumatic obstacle. Instead the pipeline vehicle may unwittingly proceed into an area in which it can no longer find sufficient traction to return from whence it came. A pipeline vehicle may in such a scenario simply wander further into a wider pipeline section beyond a point of no return. This is especially the case in pipelines having an incline and when the pipeline changes in size gradually or wherein a more narrow pipeline ends into a more wider pipeline, for example at a T-junction. When an attempt is made to pull the pipeline vehicle back it often becomes snagged at the junction between the two pipelines preventing the retraction thereof. This is particularly true for junctions at which the branched pipeline and the main pipeline converge under a sharp angle.

Entrapment can also occur when the pipeline vehicle moves into a pipeline which is too narrow. The pipeline vehicle commonly wedges itself in the narrow passageway and becomes stuck. It is common in sewage pipe networks that the main pipeline may even still be in use while a branched pipeline is explored. Here too it is most undesirable to accidentally move into the main pipeline. Besides the substantial damage it could cause to the vehicle it could further cause a substantial obstruction of the main pipeline. In processing installations, such as for chemicals, petrol, oil or gas, getting trapped in a pipeline may even lead to the interruption of production, causing substantial financial damages. Having to damage a pipeline to retrieve a pipeline vehicle could even render the production installation unable to resume production for longer periods of time.

Pipeline vehicles are generally fitted with an electric motor and wheels for guiding and/or traction along the inside surface of the pipeline. Pipeline vehicles are commonly used for traveling through, inspecting, nondestructive testing or cleaning a pipeline from the inside.

Accordingly, a need is felt to be able to prevent entrapment of a pipeline vehicle so as to overcome at least some of the above mentioned problems.

Accordingly, it is an object of the present invention to provide the ability to overcome or reduce at least one of the disadvantages of the prior art. Furthermore it is an object of this invention to ensure early detection of entrapment risk before entrapment of the pipeline vehicle can occur.

To this end the invention provides for a system and a method as defined in one or more of the appended claims.

The present invention is, as defined in one or more of the appended claims, able to prevent a pipeline vehicle from wandering unnoticed into a section of a pipeline or pipeline network which is associated with a risk of entrapment.

According to a first aspect of the invention a system for travelling through a pipeline in a driving direction comprises a guide device according to claim 1. The guide device comprises a carriage, defining a longitudinal extent between a front end of the carriage and a rear end of the carriage. The guide device further comprises at least three surface engagement members, mounted to the carriage for supporting and guiding the carriage along an inner surface of a pipeline in at least the driving direction which extends from the rear end towards the front end of the guide device. Additionally, the guide device comprises a detection unit, arranged on the carriage, and associated with the at least three surface engagement members. Each of the at least three surface engagement members are arranged for being independently movable between a first retracted radial position and an extended radial position. In the first retracted radial position the engagement member has a radial distance to an axial axis of the guiding device which is smaller than the distance between the engagement member and the axial axis if the engagement member is in the extended radial position. In the first retracted radial position the engagement member may have a first minimal radial distance to the axial axis of the guiding device. In the extended radial position the engagement member has a maximal radial distance to the axial axis of the guiding device.
The device further comprises a first biasing system for biasing each of the at least three surface engagement members, from the first retracted radial position, towards the extended radial position. This allows the guide device to be centered in the pipeline using at least three surface engagement members. The detection unit is arranged for detecting when at least one member of the at least three surface engagement members moves in the direction of and along a path extending from the first retracted radial position to the extended radial position into, or beyond, a detection radial position which lays between the first retracted radial position and extended radial position. This allows to prevent the device from wandering unnoticed into a section of a pipeline or pipeline network which is associated with a risk of entrapment because it is wider than other portion through which the device has travelled. The system is arranged to stop and/or reverse a traction unit if the detection unit, in use, detect that at least one member of the at least three surface engagement members moves in the direction of and along the path extending from the first retracted radial position towards the extended radial position into, or beyond, the detection radial position.

Each member of the at least three surface engagement members can be arranged for being independently movable. It will be appreciated that the minimal radial distance from the axial axis of the guiding device determines the minimal diameter of the pipeline which the system can navigate preventing constriction of the system. It will be appreciated that risk of pipeline entrapment arises when the pipeline assumes a dimension above which the pipeline vehicle is no longer able to clamp or support itself against the inner surface of the pipeline. At least, such that return movement of the system may become prevented. By detecting when at least one member of the at least three surface engagement members moves in the direction of and along the path extending from the first retracted radial position, this allows for detecting when the pipeline assumes dimensions in which risk of entrapment arises. The detection unit is arranged for sending a detection signal. Such a detection signal could be used to alert an operator, or as a stop or reverse motion signal for an optional further traction unit. Thus, allowing for timely corrective measures, before the system becomes entrapped.

Optionally, the first biasing system is further arranged for biasing each of the at least three surface engagement members from the extended radial position towards a second retracted radial position if the engagement member reaches the extended radial position. The second retracted radial position the engagement member has a radial distance to the axial axis of the guiding device which is smaller than the maximal radial distance and which may be a second minimal radial distance. The second minimal distance may but need not be the same as the first minimal distance. A benefit is that the surface engagement members are prevented from getting snagged at junctions or portion of the pipeline which have a wider diameter than other portions of the pipeline through which the device has traveled. If for example as discussed above such a wider portion would be detected and the traction unit would be reversed the chances that the device becomes jammed because the extended engagement members would prevent the device from travelling back into the more narrow portion of the pipeline are lowered because the engagement member will be forced towards the second retracted positon once they have reached the extended position (towards which they were pushed from the first retracted position). If the engagement members would only be forced towards the extended position for centering the device in the pipeline and would stay in the extended position if the pipeline becomes so wide that in the extended position each of the engagement members can not contact the inner wall of the pipeline the engagement members may prevent the device from being forced back into the more narrow portion of the pipeline. Thus a benefit is that the guide member or members move forward such that it or they do not interfere with a retraction or reverse movement of the pipeline vehicle in general and offer extended rearward support upon retraction.

Optionally, the guide device is further provided with a second biasing system arranged for biasing each of the at least three surface engagement members from the first retracted radial position, towards the extended radial position until it reaches a third radial position laying between the first retracted radial position and the extended radial position. A benefit is that this provides additional dampening of lateral movement of the carriage through the surface engagement members when the carriage is in relative closer proximity to the wall, even in the event that the first biasing means would become broken, damaged or otherwise unable to provide sufficient force on the biasing member to prevent the carriage from moving to or impacting the inner surface of the pipeline.

Optionally, the third radial position lays between the first radial position and the detection position. This beneficially allows for the detection of risk of entrapment before maximal extension of surface engagement members has occurred. Thus, also allowing for detection of risk of entrapment prior to any loss of radial support of the carriage.

Optionally, the guide device is further provided with a third biasing system arranged for biasing each of the at least three surface engagement members from the second retracted radial position, towards the extended radial position until it reaches a fourth radial position laying between the second retracted radial position and the extended radial position. A benefit is that the third biasing member provides a supporting role in centralizing the guide device in the pipeline when the surface engagement members are in the second retracted radial position, or in between the second radial position and the maximally radially extended position. This may happen if the pipeline becomes so wide that the detection unit detects this event and wherein engagement members reach the extended position so that the engagement members move from the extended position towards the second retracted position by means of the first biasing system. In that case the third biasing system provides still centralizing of the unit once the unit is moved back into the more narrow part of the pipeline, for example because the traction unit has been reversed by the detection unit or the detection unit generates an alarm resulting in the device being pulled back towards the more narrow part of the pipeline by means of pulling back the device by means of for example its tether line. This provides additional dampening of lateral movement of the carriage.

Optionally, the surface engagement members are mounted to mutually different arms respectively. Each arm can be pivotably connected to the carriage from a first angular position associated with the first retracted radial position to a second angular position associated with the extended radial position and from the second angular position towards a third angular position associated to the second retracted radial position. A fourth angular position is associated with the detection radial position and lays between the first and second angular position. The arm can be pivotable around a rotating axis R1 which is at least substantially perpendicular to the axial axis. In that case in the first angular position the arm is directed towards the rear end of the device and in the third angular position the arm is directed toward the front end of the device. A benefit is that this allows for the surface engagement members to be moved into the direction of motion. This allows for the surface engagement members to provide support increasingly further forward with respect to the carriage as pipeline sizes increases. It will be appreciated that the angles are defined relative to a longitudinal direction of the arm or the arm is interpreted as a practical arm being a straight line between the rotational axis R1 of the arm and the most distal end of the surface engagement member associated with the arm.

Optionally, when in the second angular position, the arm is directed substantially perpendicular to the axial axis of the device. It will be appreciated that arms which may have bends, angles or other irregularities are interpreted by the practical arm. The practical arm being observed as a straight line between the pivot point and the most distal end of the arm.

Optionally, the at least three arms are pivotably mounted to the carriage on a position near to the front end of the carriage. A benefit is that this allows all the surface engagement members to be in the front, read near or on the front end, of the guide device thereby detecting further ahead.

Optionally, the first biasing system comprises tension springs. Each tension spring can be associated with one arm and extends between the arm and a position located between a pivoting connection of the arm and the front end of the carriage wherein the pivoting connection of the arm is arranged for the pivotable connection of the arm to the carriage or a position at the front end of the carriage.

The arm can be pivotably mounted to the carriage. A benefit is that this allows for a passive pulling force to each arm which provides both a pivoting force, for pivoting each arm and a force directing each arm radially outward, which can additionally be used to buffer effects of lateral movements of the carriage and changes in relief of the pipeline during movement.

Optionally, the second biasing system comprises first push springs. Each first push spring is associated with one arm and is located between a pivoting connection of the arm and the rear end of the carriage. The pivoting connection of the arm is arranged for the pivotable connection of the arm to the carriage.

Optionally, the first push spring associated with one of the arms is spring loaded if the arm is in the first angular position and wherein the push spring is relieved if the angular position of the arm is larger than a fifth angular position. The fifth angular position is associated with the third radial position and lays between the first angular position and the second angular position. A benefit is that the first push spring provides additional buffering when the carriage is in close proximity to the wall and at high risk of damage by physically contacting with the inner wall of the pipeline.

Optionally, the fifth angular position lays between the fourth angular position and the first angular position. Thus, the second biasing means is released before an arm reaches the fourth angular position. Additionally, this allows pipeline vehicle to use the second biasing means to provide additional and increased static friction by the surface engagement members with the inner surface of the pipeline when the diameter of the pipeline approaches the minimum diameter through which movement of the system is possible without constriction.

Optionally, the third biasing system comprises second push springs. Each second push spring is associated with one arm and can be located between a pivoting connection of the arm and the front end of the carriage wherein the pivoting connection of the arm is arranged for the pivotable connection of the arm to the carriage. A benefit is that the second push spring provides buffering of lateral motion of the carriage over a further angular range of the surface engagement members. In particular, when the carriage is in closer proximity to the wall and at high risk of damage by physically contacting with the inner wall of the pipeline.

Optionally, the second push spring associated with one of the arms is spring loaded if the arm can be in the third angular position. The push spring can be relieved if the angular position of the arm is smaller than a sixth angular position associated with the fourth radial position. The sixth angular position lays between the third angular position and the second angular position. A benefit is that buffering of lateral movement of the carriage is provided without allowing the respective surface engagement member to extend such that it may cause snagging upon retraction.

Optionally, the driving direction extends from the rear end of the device towards the front end of the device.

The system is provided with a traction unit for driving the guide device in at least the driving direction. It will be appreciated that in substantially vertical pipelines or pipeline sections the guide device can be driven with assistance of or solely by the force of gravity. Preferably, the traction unit is arranged for receiving the detection signal of the detection unit. A benefit is that this allows the traction unit to respond directly to the detected risk of entrapment.

Optionally, the guide device is provided with connection means for connection to a traction unit for driving the guide device in at least the driving direction. It will be appreciated that connection means may comprise a simple connector or an adaptor. It will be appreciated that the connector or adapter are chosen such that the pulling or pushing weight of the system can be supported thereby.

Optionally, the traction unit comprises further surface engagement members arranged for providing traction against the inner surface of the pipeline. This allows the pipeline vehicle to have traction under any inclination.

The system is arranged to stop and/or reverse the traction unit if the detection unit, in use, detect that at least one member of the at least three surface engagement members moves in the direction of and along the path extending from the first retracted radial position towards the extended radial position into, or beyond, the detection radial position.

Optionally, the system is arranged to stop and/or reverse the traction if the detection unit, in use, detects that at least one arm rotates along an angular path extending in a direction from the first angular position towards the second angular position into or beyond the fourth angular position. A benefit is that the system is impeded from further advancing into an area of entrapment risk.

Optionally, the detection unit comprises a trigger element which is movable mounted to the carriage. The detection unit can also comprise a sensor arranged for being triggered by movement of the trigger element. Additionally, the detection unit can comprise a collection of connector elements. Each surface engagement member is mechanically connected to the trigger element by means of one of the connector elements of the collection. A benefit is that this allows for a single sensor to detect movement of all three surface engagement members, thereby saving space on the guide device. A further benefit is that the extra space allows for the downsizing of the guide device, but can also be used for introducing and expanding inspection tools on the guide device.

Optionally, the trigger element is arranged for sliding along a path on the carriage from a non-trigger position, in which the sensor remains untriggered and a trigger position, in which the sensor is triggered by a displacement of the trigger element out of the non-trigger position. It will be appreciated that the trigger element is releasably secured in the non-trigger position when all the surface engagement members are in between the first angular position and the fourth angular position. Optionally, the triggering of the sensor can be accomplished by tilting the guide device forward, such as would occur when moving into a sharp downward slope or chute like area. This would additionally detect a possible fall hazard, associated with a risk of entrapment.

Optionally, each connector element is a cable arranged for providing a pulling force on the trigger element for moving the trigger element from the non-trigger position into the trigger position, when at least one of the at least three surface engagement members moves into, or beyond, the detection position and into or beyond the fourth angular position as defined herein above. This allows for the cable to otherwise remain slacking and prevent unnecessary pulling force on the trigger element, as would be the case when the connector element was rigid or a flexible spring or coil.

Optionally, each connector element is a cable arranged for providing a pulling force on the trigger element for moving the trigger element from the non-trigger position into the trigger position, when at least one of the at least three surface engagement members moves into, or beyond, the fourth angular position.

Optionally, the sensor is one of a switch or an optical sensor, such as a light sensor or motion sensor.

Optionally, the tension spring is one of a helical spring, a solenoid actuator, a magnet, a magnetic pair and elastic fibers.

Optionally, the first push spring is one of a compression spring, a compressible elastic material, a magnetic pair, and a solenoid actuator.

Optionally, the second push spring is one of a compression spring, a compressible elastic material, a magnetic pair, and a solenoid actuator.

Optionally, the carriage comprises an inspection tool for inspecting a physical state of the pipeline. A benefit is that the inspection tool can inspect closer to an area of risk of entrapment than a pipeline vehicle could. A further benefit is that this allows the pipeline vehicle to remain at an additional distance from an area of entrapment risk.

Optionally, the inspection tool comprises at least one of an ultrasonic transducer, a magnetic detector, an eddy current probe, a camera, a heat sensor, a chemical compound detector, a gas detector, a sub-ultrasonic transducer, a humidity sensor, and an electromagnetic acoustic transducer. It will be appreciated that the ultrasonic transducers have transmitter and receiver capabilities for ultrasonic frequencies.

Optionally, the at least three surface engagement members are radially spaced from each other such as to form a Cn symmetry group, wherein n is an integer and at least three. A benefit is that this allows for symmetrical radial support of the guide device. Supporting the guide device equally in all directions perpendicular to the direction of travel. It will be appreciated that this also includes any triskelion, or higher symmetrical arrangement, of the engagement members on the carriage in which the surface engagement members move outward substantially perpendicular to the direction of motion.

Optionally, the at least three surface engagement members comprise each two surface engagement members.

Optionally, the system is provided with a support cable. The support cable can be arranged, in use, to extend away from the guide device against the driving direction of the device. The support cable can here be arranged for retrieval of the pipeline vehicle assembly thereby, data communication with the pipeline vehicle assembly, or providing electrical energy to the pipeline vehicle, or any combination thereof

Optionally, the system comprises an electronics unit. The electronics unit comprising an electronic support system can be arranged for sustaining, supporting, or controlling electrical systems present on the pipeline vehicle assembly or any combination thereof.

Optionally, the system comprises a cable connection unit for connecting a support cable thereto. The support cable can be arranged for retrieval of the pipeline vehicle assembly thereby, data communication with the pipeline vehicle assembly, or providing electrical energy to the pipeline vehicle, or any combination thereof.

Optionally, the cable is connected to the system on or near a rear end of the system. A direction from the rear end of the system towards the front end of the system is the driving direction of the system.

Optionally, each of the at least three surface engagement members comprises a guiding element for assisting in movement of the device along the inner surface of the pipeline. The guiding element can be a wheel, a skid, or a continuous track transport mechanism. This allows for reduced friction of the surface engagement members with the wall during movement of the guide device.

According to a second aspect of the current invention a method is provided of preventing entrapment of a pipeline vehicle in a pipeline infrastructure as defined in claim 37. The pipeline infrastructure defining a first pipeline section having a first diameter, and a second pipeline section having a second diameter. The second diameter being greater than the first diameter, and the second pipeline section being connected to the first pipeline section. The method comprises the step of providing the pipeline vehicle system as according to the first aspect of the invention. The method further comprises the step of introducing the system into the first pipeline section, such that the at least three surface engagement members are in between the first angular position and the fourth angular position. The method also comprises moving the system in the driving direction towards the second pipeline section. The method further comprises causing at least one member of the at least three surface engagement members to move into or beyond the detection radial position when the guide device reaches the second pipeline section. The method also comprises detecting the movement of the at least one member of the at least three surface engagement members into or beyond the detection radial position. The method further comprises stopping the movement of the system.

Optionally, stopping the pipeline vehicle comprises deactivating the traction unit as defined in the first aspect of the current invention.

Optionally, detecting movement into or beyond the detection radial position generates a warning message/signal. It will be appreciated that the detection signal as defined in the first aspect of the current invention can be a warning signal. It will further be appreciated that such a warning signal is, directly or indirectly, communicated to a human interface such that an operator is warned.

Optionally, detecting movement into or beyond the detection radial position reverses movement of the guide device in a second direction of movement opposite to the driving direction.

The invention will now be further elucidated by description of some specific embodiments thereof, making reference to the attached drawings. The detailed description provides examples of possible implementations of the invention, but is not to be regarded as describing the only embodiments falling under the scope. The scope of the invention is defined in the claims, and the description is to be regarded as illustrative without being restrictive on the invention. In the drawings:
Figure 1 shows a longitudinal cross section of a guide device in a detection radial position;
Figure 2 shows a longitudinal cross section of the guide device in a second retracted radial position;
Figure 3 shows an isomeric view of the guide device in the detection radial position;
Figure 4 shows an isomeric view of the guide device in the second retracted radial position;
Figure 5 shows a side elevation of the guide device as part of a system; a
Figure 6 shows a flow diagram of an entrapment prevention method for a pipeline vehicle in the system of Figure 5 in a pipeline infrastructure; and
Figures 7A-7C show three possible configurations of a pipeline section A and a pipeline section B respectively.

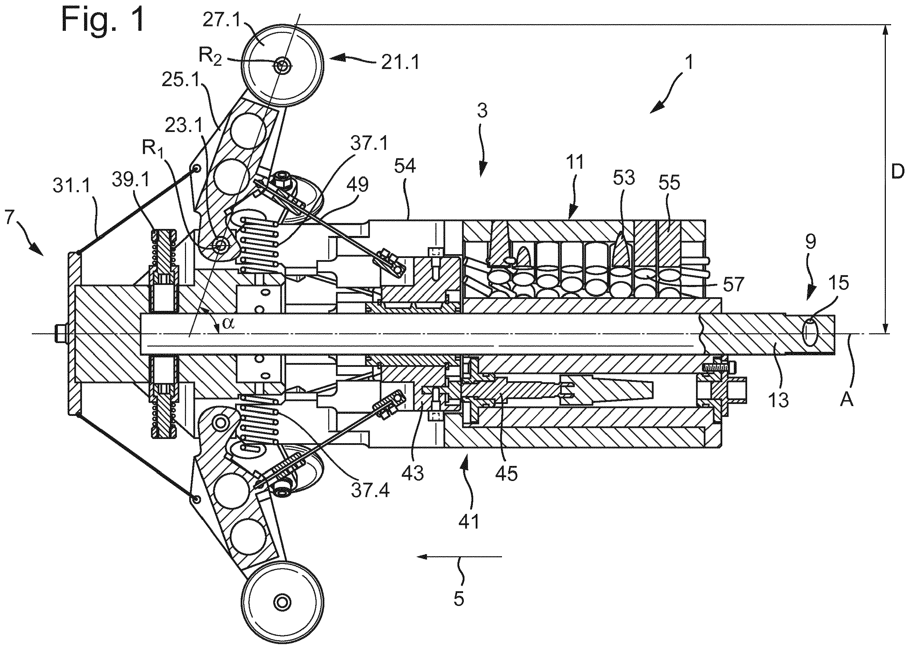

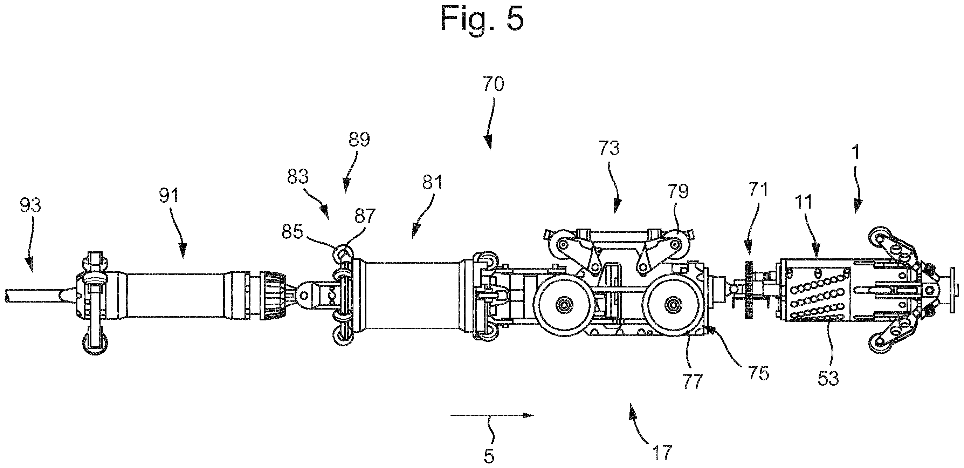

In Figure 1 a longitudinal cross section of a guide device 1 is shown. The guide device 1 has a carriage 3 which defines a longitudinal direction according to arrow 5 between a front end 7 and a rear end 9 of the carriage 3. The carriage 3 also has a lateral outer side 11. A central shaft 13 is also part of the carriage. The central shaft 13 extends through the carriage 3 and extends from the rear end 9 of the carriage 3. A connection element 15 is provided on a rear end of the central shaft 13 by which the guide device 1 can be tethered to a pipeline vehicle 17, as shown in Figure 5 as part of a pipeline vehicle system 70. As such, the pipeline vehicle 17 is situated rearwardly of the guide device 1 and follows the guide device 1 when the guide device 1 moves forward through a pipeline (not shown, but conventional). Forward movement is defined as movement in the longitudinal direction of arrow 5, which is a forward direction. The guide device 1 has six surface engagement members 21.i (i=1,2,3,4,5,6) which are each separately hinged, by an arm 25.i, on the carriage 3 near the front end 7 of the carriage 3. This allows each of the surface engagement members 21.i to individually pivot about a pivot (connection) point 23.i (also referred to as pivoting connection). Thus each engagement member is pivotable around an associated first rotational axis R1 which is at least substantially perpendicular to the axial axis A. Each surface engagement member 21.i further comprises an associated wheel 27.i connected to a free end of the arm 25.i. In this example each wheel 27.i is rotatable around an associated second rotational axis R2 which is substantially parallel to the associated first rotational axis R1. One end of the arm 25.i is connected to the wheel 27.i while another end of the arm is connected to the carriage 3 via de pivot point 23.i. The engagement members 21.i are spaced symmetrically and evenly apart along a circumference of the carriage 3. The wheel 27.i of the engagement member 21.i is arranged for making contact with an inner surface (not shown, but conventional) of the pipeline. The arm 25.i is connected to a first biasing member 31.i, also known as a first biasing system. The first biasing member 31.i is a tension spring provided as a helical spring which is connected to the arm 25.i and a position of the carriage which is located between a pivoting connection 23.i of the arm and the front end 7 of the carriage wherein the pivoting connection of the arm is arranged for the pivotable connection of the arm to the carriage.
The helical spring is tensed and applies a pulling force to the arm 25.i in the forward direction 5. The helical spring is selected such that the pulling force exerted on the arm 25.i, at least partially, in the forward direction 5 is sufficient for biasing the surface engagement member 21.i from a first retracted radial position towards an extended radial position. The first biasing system is further arranged for biasing the engagement member 21.i from the extended radial position toward a second retracted radial position if the engagement member 21.i reaches the extended radial position. In the first retracted radial position the surface engagement member 21.i is radially retracted on and along the lateral outer side 11 of the carriage 3. If the engagement members 21.i are each in the first retracted radial position the surface engagement members 21.i each have a first minimum distance to an axial axis A of the carriage 3. This means that if the engagement members are each in the first retracted radial position the engagement members 21.i in combination define a first, smallest, inner diameter for a cylindrically shaped pipeline where through the guide device 1 can travel. If the engagement members 21.i are each in the extended radial position the surface engagement members 21.i each have a maximum distance to the axial axis A of the carriage 3. This means that if the engagement members are each in the extended radial position the engagement members 21.i in combination define a second, largest, inner diameter for a cylindrically shaped pipeline where through the guide device 1 can travel with each of the engagement members being in contact with the inner wall of the pipeline. In the second retracted radial position the engagement member has a radial distance to the axial axis of the guiding device which is smaller than the maximal radial distance and which is in this example a second minimum distance which may but need not be equal the first minimum distance. In figure 1 the radial distance between an engagement member 21.i and the axial axis A is indicated by arrow D.

When each surface engagement member 21.i assumes the first retracted radial position the corresponding arm 25.i, assumes a first angular position in which the arm 25.i makes an angle of, approximately, 0° with respect to the axial axis A. More in general, the arm 25.i becomes, substantially, parallel with the axial axis A and extends towards the rear end 9 of the carriage 3. When each surface engagement member 21.i assumes the extended radial position the corresponding arm 25.i, assumes a second angular position. More in general the arm 25.i, makes a 90° angle with the axial axis A. More in general the arm 23.i assumes a position which is perpendicular to the axial axis A. It will be appreciated that the angles are defined relative to a longitudinal direction of the arm or the arm is interpreted as a practical arm being a straight line between the pivot point 23.i of the associated arm 25.i (first rotational axis R1) and the associated second rotational axes R2 of the wheel 27.i, and more in general a straight line between the pivot point 23.i (first rotational axis R1) and the most distal end of the associated surface engagement member 21.i. In figure 1 such an angle is indicated by angle α. In the second retracted radial position the arm 25.i extends away from the rear end 9 of the carriage 3. In the second retracted radial position each arm 25.i assumes an angle of, approximately, 145° with the axial axis A. When passing from the first retracted radial position to the second retracted radial position the surface engagement member 21.i, thus must always first become radially extended from the carriage before being able to assume the second retracted radial position. In Figure 1 the surface engagement members 21.i are shown in a detection radial position between the first retracted radial position and the extended radial position defining a detection diameter between the first and second inner diameter. The arms can be seen to have assumed a fourth angular position associated with the radial detection position. The fourth angular position lie between the first angular position and the second angular position, and has an angle of, approximately, 80° with respect to the axial axis A. A second biasing member 37.i, also known as a second biasing system, is provided for each arm 25.i which is only attached to the carriage 3. The second biasing member 37.i is placed toward the rear end 9 of the carriage 3 with respect to the pivot point 23.i. The second biasing member 37.i is arranged for exerting a pushing force on the engagement member 21.i, in particular on the arm 25.i, when the engagement member 21.i is in between the first retracted radial position and a third radial position, such that the engagement member 21.i is biased toward the extended radial position. The third radial position being a radial position between the first retracted radial position and the detection radial position. In other words the second biasing system is arranged for biasing each of the at least three surface engagement members from the first retracted radial position, towards the extended radial position until it reaches a third radial position laying between the first retracted radial position and the extended radial position.

The surface engagement members 21.i being in the third radial position here corresponds to the arms 25.i assuming a fifth angular position. The fifth angular position being an angular position between the first angular position and the fourth angular position. In the fifth angular position the arm 25.i assumes, approximately, an angle of 45° with respect to the axial axis A. The second biasing member 37.i is a pressure spring, provided as a further helical spring, arranged such that it is compressible in between the arm 25.i of the surface engagement member 21.i and the carriage 3. A third biasing member 39.i, also a third biasing system, is provided for each surface engagement member 21.i, and is only attached to the carriage 3 and placed toward the front end 7 with respect to the pivot point 23.i. The third biasing member 39.i is arranged for exerting a pushing force on the engagement member 21.i, in particular on the arm 25.i, when the engagement member 21.i is in between a fourth radial position and the second retracted radial position, such that the engagement member 21.i is biased towards the extended radial position. The fourth radial position lays between the extended radial position and the second retracted radial position. In other words the third biasing system is arranged for biasing each of the at least three surface engagement members from the second retracted radial position, towards the extended radial position until it reaches a fourth radial position laying between the second retracted radial position and the extended radial position.

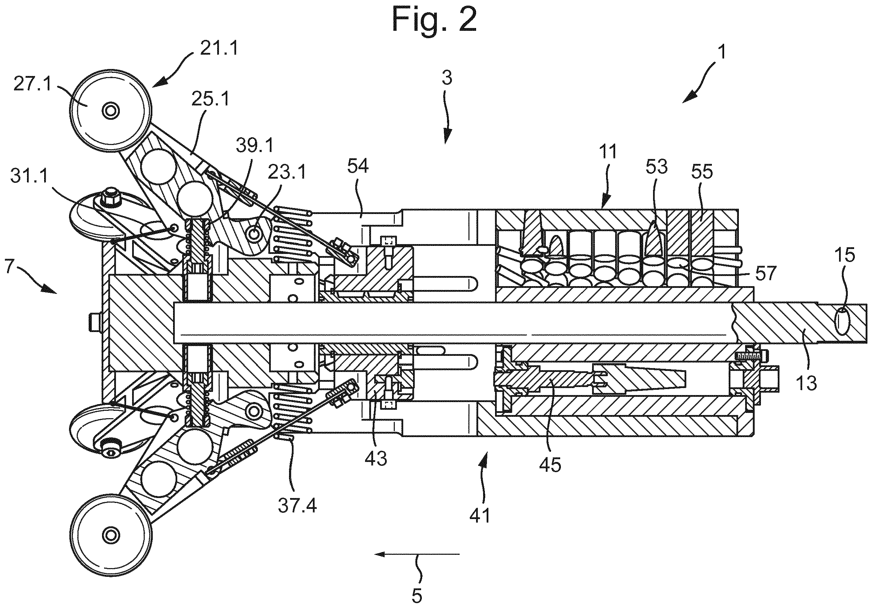

When each of the surface engagement members 21.i assume the fourth radial position, the corresponding arm 25.i assumes a sixth angular position, which lays between the second angular position and the third angular position, making an angle with the axial axis A of, approximately, 120°. It will be appreciated that, also separate from this example, the second biasing members 37.i and third biasing members 39.i can instead be present on each arm 25.i, or surface engagement member 21.i. The guide device 1 is further fitted with a detection unit 41. The detection unit 41 has a trigger element 43 and a detector 45. The trigger element 43 is slidably arranged along the central shaft 13, in particular on a slide path. In Figure 1 the trigger element 43 encircles the central shaft 13. The trigger element 43 is movable between a non-trigger position and a trigger position. In Figure 1, the trigger element 43 is shown in the non-trigger position, while in Figure 2 the trigger element is shown in the trigger position. The trigger element 43 is further provided as a ring shaped metal block. It will be appreciated that the trigger element 43 does not need to fully encircle the central shaft 13. It will be appreciated that the trigger element can be releasably secured in the non-trigger position by static friction with the central shaft 13 or the carriage 3. The trigger element 43 is connected to the arm 25.i of each of the surface engagement members 21.i via a collection of connector elements 49.i. Each connector element 49.i is provided as a stainless steel cable and is of such length that the cable has slack until a respective member of the surface engagement members 21.i moves from the first angular position past the fourth angular position. After this, the cable no longer has any slack. The trigger element 43 can be pulled from its position as shown in figure 1 into its trigger position as shown in figure 2 by any of the respective connector elements 49.i. in response to pulling force of the associated first biasing members 31.i. The detector 45 is provided as an active optical sensor which emits an electromagnetic signal, in this example light, and measures the return thereof from a targeted part of the trigger element. When the trigger element 43 moves away from the optical sensor displacement of the trigger element 43 is detected by a change in return signal. The detection of displacement of the trigger element 43 corresponds to the detection of any of the surface engagement members 21.i moving from the first angular position past the fourth angular position, thereby detecting the risk of entrapment of the pipeline vehicle 17. The detector 45 is communicatively connectable to the pipeline vehicle 17 for passing along a detection signal to the pipeline vehicle. The detection signal in this example is a stop signal. The position of the surface engagement members 21.i in Figure 1 is also known as a zero position. The zero position is the position at which at least one guide member 21.i is moved outward to the point where the connector element 49.i is tensioned, but has not yet pulled the trigger element 43 in the forward direction 5. The trigger element 43 is shown to still touch the detector 45. It will be appreciated that the detection unit 41 can also be provided as a switch (not shown, but conventional) on the carriage 3 which can be pulled or released by any of the connector elements 49.i. Pulling the switch from a first position thereof, of non-detection, into a second position, of detection, would then trigger detecting risk of entrapment. It will further be appreciated that, separate from this example, it is possible for the trigger element 43 to form a circuit with the detector 45, which is broken by pulling the detection unit 43 into the trigger position. Thus, resulting in a detection of risk of entrapment. Alternatively, the detector 45 may comprise a pressure sensor, such as a pressure plate, detecting the presence of the trigger element 43 in the non-trigger position via pressure exerted upon the pressure sensor by the trigger element 43. It will be appreciated that a detector 45 can be any sensor able to detect the presence of the trigger element 43 in the trigger and non-trigger position.

In Figure 2 a longitudinal cross section of the guide device 1 is shown, having each of the surface engagement members 21 in the sixth angular position. The carriage 3 is further shown to have an optional inspection tool 53. The inspection tool 53 is the same as is shown in Figure 1. The inspection tool 53 allows for inspection of a physical state of the pipeline. The inspection tool 53 has a series of ultrasonic transducers 55. It will be appreciated that the ultrasonic transducers 55, also separate from this example, can have transmitter and receiver capabilities for ultrasonic frequencies. In use, the ultrasonic transducers 55 are used to measure the physical distance to the pipeline of the inspection tool 53 determining the presence of irregularities or fractures in the inner surface of the pipeline.

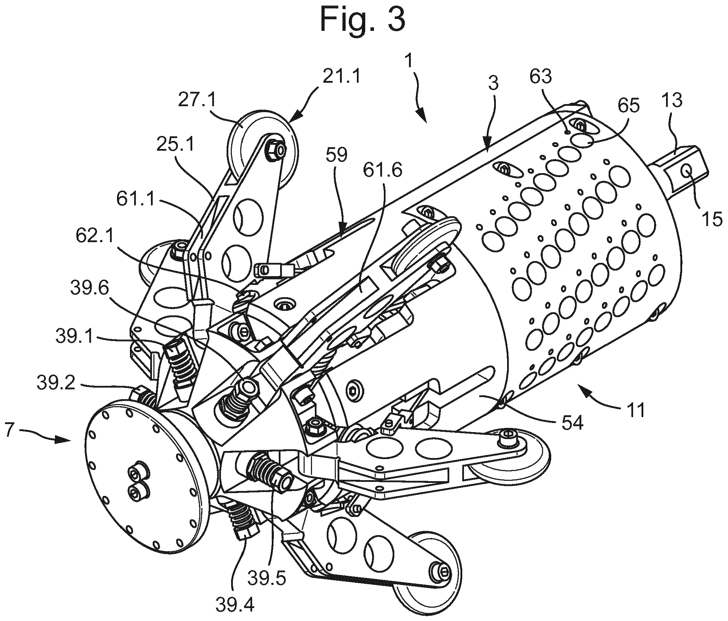

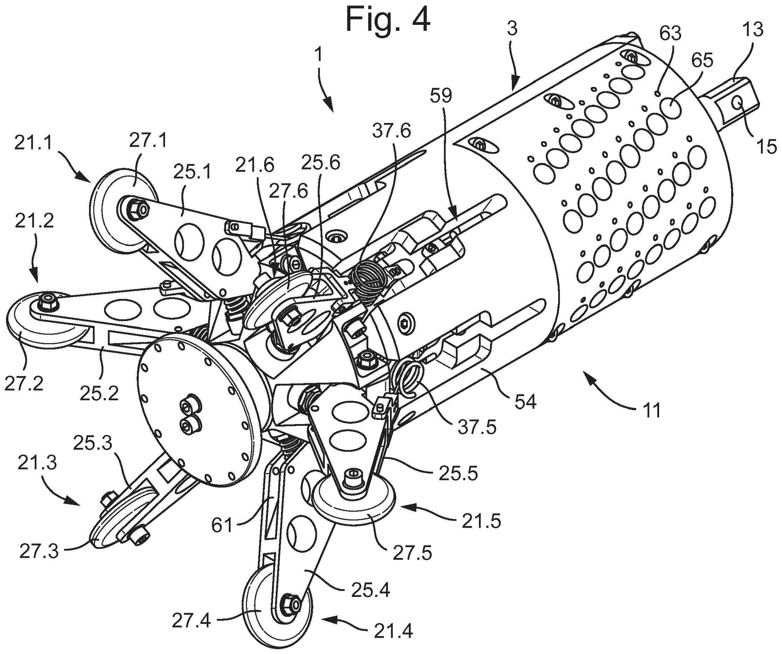

In Figure 3 an isometric view of the guide device 1 is shown with each of the engagement members 21.i in the detection radial position,, corresponding to Figure 1 (in Figures 3,4 first biasing elements 31.i are not visible for clarity reasons) . In Figure 3 it is shown that the carriage 3 is provided with a housing 54. The housing 54 is provided with accommodation openings 59 shaped to partially accommodate the surface engagement members 21.i when in a first position. The arm 25.i of each surface engagement member 21.i is provided with a recess 61.i for accommodating the third biasing member 39.i therein and a recess 62.i for accommodating the second biasing member 37.i therein. It is further shown in Figure 3 that the ultrasonic transducers 55 are positioned in a series of slanted rows 57 as seen from Figure 1. The series of slanted rows curve such as to follow a curvature of the outer lateral side 11, of the inspection tool 53. The inspection tool 53 is communicatively connectable to the pipeline vehicle 17 for transmitting measured data from the inspection tool 53. It is shown that for each ultrasonic transducer 55 two holes are provided in the housing a relatively small first hole 63 and a relatively large second hole 65. The second hole 65 being larger in diameter than the first hole 63. The second holes 65 may be arranged for allowing acoustic access to the inner surface of the pipeline for both an acoustic transmitter (not shown, but conventional) and acoustic receiver (not shown, but conventional). The acoustic transmitter and receiver are part of each ultrasonic transducer 55. The first holes each have a screw to fixate the ultrasonic transducers 55 in the holes 65. In Figures 3 through 5 the first biasing members 31 are deleted for clarity.

In Figure 4 an isomeric view of the guide device 1 is shown with each of the engagement members 21 in the second retracted radial position., corresponding to Figure 2. Note, that in Figure 2 the slide path of the detection element 43 is blocked, such that the third angular position is prevented from being greater than 135°. It will be appreciated that each angular position herein is determined by the angle of the arm 25.i with respect to the axial axis A. It will be appreciated that any interference of the second biasing member 37.i with the connector element 49 does not affect the functionality thereof.

In Figure 5 a side elevation of the guide device 1 as part of a pipeline vehicle system 70 is shown. The system 70 includes the guide device 1 as shown in Figures 1 through 4. The guide device 1 is both physically and communicatively connected to the pipeline vehicle 17 via an adaptor 71. The pipeline vehicle 17 is shown to have a traction unit 73 with an electric motor (not shown, but conventional) and further surface engagement members 75. When a stop signal generated by the detector 45 is sent to the pipeline vehicle 17 the stop signal is used to shut down the electric motor to prevent any part of the pipeline vehicle 17 from entering an area of the pipeline or a thereto connected pipeline (not shown) associated with a risk of entrapment of the pipeline vehicle 17. The further engagement members 75 have base wheels 77 and extendable wheels 79. The extendable wheels 79 are extendable for providing support and pressure against the inner surface of the pipeline. This prevents loss of traction by wheels 77. The pipeline vehicle 17 further has an electronics unit 81 connected to the traction unit 73. The electronics unit 81 is provided with additional surface engagement members 83. The additional surface engagement members 83 are a set of wheels 85 about the circumference of a flange 87 at a trailing end 89 of the electronics unit 81. The electronics unit 81 is arranged for providing electricity to the electric motor, the detector 45, and to the inspection tool 53. The electronics unit is connected to a cable connection unit 91 with a support cable 93 connected thereto. The support cable 93 provides electrical energy to the electronics unit 81 and allows for communication of electrical systems onboard of the system 70.

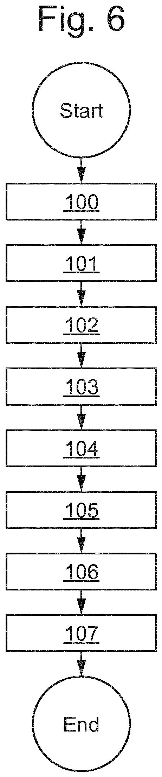

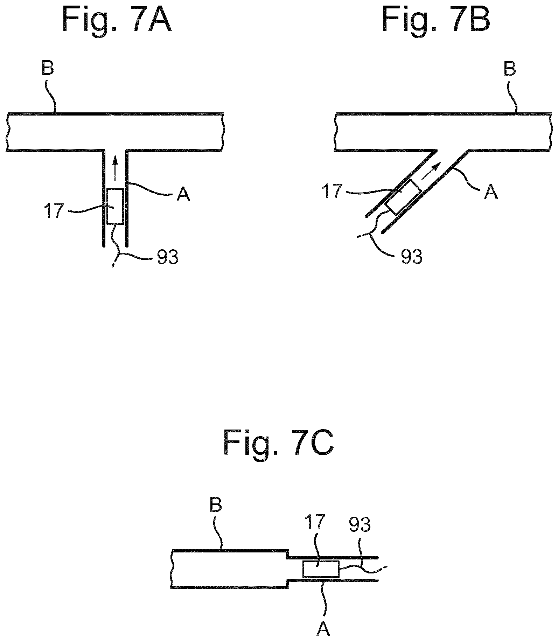

In Figure 6 the following steps are identified in a method for preventing pipeline vehicle entrapment in a pipeline infrastructure. The pipeline infrastructure at least includes a first pipeline section A with a diameter A between the first inner diameter and second inner diameter, and a second pipeline section B, connected to the first pipeline section, with a diameter B greater than the second inner diameter. Three possible configurations of the pipeline sections A and B are shown in figures 7.A, 7.B and 7.C respectively.

In a first step 100 the system 70 is provided by connecting the guide device 1 to the pipeline vehicle 17 such that the guide device 1 is both physically and communicatively connected to the pipeline vehicle 17. The first step 100 leads to the second step 101.

In the second step 101 system 70 is introduced into the first pipeline section A through an opening. The guide device 1 is introduced ahead of the pipeline vehicle 17 and is placed such that the surface engagement members 21 are all in between the first angular position and the fourth angular position. It will be appreciated that the trigger element 43 is in the non-trigger position. The second step 101 leads to a third step 102.

In the third step 102 the system 70 is driven by the traction unit 73, with respect to the first pipeline section A, in the longitudinal direction 5 toward the second pipeline section B. The third step 102 leads to a fourth step 103.

In the fourth step 103 at least one of the engagement members 21.i, moves past the fourth angular position upon reaching the second pipeline section. This is caused by the larger diameter B of the second pipeline section. The fourth step 103 leads to a fifth step 104.

In the fifth step 104 the trigger element 43 is moved into the trigger position because at least one of the engagement members moves past the fourth angular position (associated with the detection radial position), which is detected by the detector 45. The fifth step 104 leads to a sixth step 105.

In the sixth step 105 the detector 45 sends the stop signal to the pipeline vehicle 17. The sixth step 105 leads to a seventh step 106.

In the seventh step 106 the traction unit 73 is turned off, more in particular the electric motor is turned off, stopping any further, active, movement of the system 70 into the longitudinal direction 5. The seventh step leads to an eighth step 107.

In the eighth step 107 the system 70 is retracted in an opposite direction to the longitudinal direction 5. The retraction occurs by pulling the system 70 complete out of the second pipeline section back into the first pipeline section. This is facilitated now the at least one engagement member which moved the trigger element into the trigger position is moved towards the second retracted position. Subsequently the system is brought out of the pipeline infrastructure by the support cable 93 and/or by reversing the motor of the traction unit 73.

Accordingly there is described a system and method for travelling through a pipeline in a driving direction comprising a guide device having a carriage defining a longitudinal extent between a forward end of the carriage and a rear end of the carriage. The guide device has at least three surface engagement members, mounted to the carriage for supporting and guiding the carriage along an inner surface of a pipeline in at least the driving direction extending from the rear end towards the front end of the guide device. The guide device has a detection unit, arranged on the carriage, arranged for being communicatively connected to a pipeline vehicle. Each of the at least three surface engagement members are arranged for being independently movable between a first retracted radial position, where the engagement member has a minimal radial distance to an axial axis of the guiding device, and an extended radial position, where the engagement member has a maximal radial distance to the axial axis of the guiding device. The device has a first biasing system for biasing each of the at least three surface engagement members, from the first retracted radial position, towards the extended radial position. The detection unit is arranged for detecting when at least one member of the at least three surface engagement members moves in the direction of and along a path extending from the first retracted radial position to the extended radial position into, or beyond, a detection radial position which lays between the first retracted radial position and extended radial position.

It is thus believed that the operation and construction of the present invention will be apparent from the foregoing description and drawings appended thereto. For the purpose of clarity and a concise description features are described herein as part of the same or separate embodiments, however, it will be appreciated that the scope of the invention may include embodiments having combinations of all or some of the features described. It will be clear to the skilled person that the invention is not limited to any embodiment herein described and that modifications are possible which may be considered within the scope of the appended claims. Also kinematic inversions are considered inherently disclosed and can be within the scope of the invention. In the claims, any reference signs shall not be construed as limiting the claim. The terms 'comprising' and 'including' when used in this description or the appended claims should not be construed in an exclusive or exhaustive sense but rather in an inclusive sense. Thus expression as 'including' or 'comprising' as used herein does not exclude the presence of other elements, additional structure or additional acts or steps in addition to those listed. Furthermore, the words 'a' and 'an' shall not be construed as limited to 'only one', but instead are used to mean 'at least one', and do not exclude a plurality. Features that are not specifically or explicitly described or claimed may additionally be included in the structure of the invention without departing from its scope. Expressions such as: "means for ..." should be read as: "component configured for ..." or "member constructed to ..." and should be construed to include equivalents for the structures disclosed. The use of expressions like: "critical", "preferred", "especially preferred" etc. is not intended to limit the invention. To the extend that structure, material, or acts are considered to be essential they are inexpressively indicated as such. Additions, deletions, and modifications within the purview of the skilled person may generally be made without departing from the scope of the invention, as determined by the claims.

## Claims

1. A system for travelling through a pipeline in a driving direction comprising a guide device (1), wherein the guide device, comprises:
a carriage (3) defining a longitudinal extent between a front end (7) of the carriage and a rear end (9) of the carriage;
at least three surface engagement members (21.i), mounted to the carriage; and
a detection unit (41), arranged on the carriage, ;
wherein each of the at least three surface engagement members (21.i) are arranged for being independently movable between a first retracted radial position wherein the engagement member has a first radial distance to an axial axis of the guiding device, and an extended radial position wherein the engagement member has a maximal radial distance to the axial axis of the guiding device and wherein the first radial distance is smaller than the maximal radial distance and may be a first minimal distance,
wherein the device further comprises a first biasing system (31.i) for biasing each of the at least three surface engagement members, from the first retracted radial position, towards the extended radial position, **characterized in that** the at least three surface engagement members (21.i) are arranged for supporting and guiding the carriage along an inner surface of a pipeline in at least the driving direction which extends from the rear end towards the front end of the guide device,
wherein the detection unit (41) is arranged for detecting, and sending a detection signal, when at least one member of the at least three surface engagement members moves in the direction of and along a path extending from the first retracted radial position to the extended radial position into, or beyond, a detection position which lays between the first retracted radial position and the extended radial position wherein the system is provided with a traction unit (73) for driving the guide device in at least the driving direction, wherein preferably the traction unit is arranged for receiving the detection signal and wherein the system is arranged to stop and/or reverse the traction unit if the detection unit, in use, detects that at least one member of the at least three surface engagement members moves in the direction of and along the path extending from the first retracted radial position towards the extended radial position into, or beyond, the detection radial position.

2. The system according to claim 1, wherein the first biasing system (31.i) is further arranged for biasing each of the at least three surface engagement members (21.i) from the extended radial position towards a second retracted radial position if the engagement member reaches the extended radial position wherein in the second retracted radial position the engagement member has a radial distance to the axial axis of the guiding device which is smaller than the maximal radial distance and may be a second minimal distance.

3. The system according to claim 1 or 2, wherein the guide device is further provided with a second biasing system (37.i) arranged for biasing each of the at least three surface engagement members from the first retracted radial position, towards the extended radial position until it reaches a third radial position laying between the first retracted radial position and the extended radial position.

4. The system according to claim 3, wherein the third radial position lays between the first radial position and the detection position.

5. The system according to any preceding claim, wherein the guide device is further provided with a third biasing system (39.i) arranged for biasing each of the at least three surface engagement members from the second retracted radial position, towards the extended radial position until it reaches a fourth radial position laying between the second retracted radial position and the extended radial position.

6. The system according to any preceding claim, wherein the surface engagement members (21.i) are mounted to mutually different arms (25.i) respectively, wherein each arm is pivotably connected to the carriage from a first angular position associated with the first retracted radial position to a second angular position associated with the extended radial position and from the second angular position towards a third angular position associated to the second retracted radial position, wherein a fourth angular position is associated with the detection radial position and lays between the first and second angular position, wherein the arm (25.i) is pivotable around a rotating axis which is at least substantially perpendicular to the axial axis, wherein in the first angular position the arm is directed towards the rear end of the device and in the third angular position the arm is directed toward the front end of the device.

7. The system according to claim 6, wherein in the second angular position the arm (25.i) is directed substantially perpendicular to the axial axis of the device.

8. The system according to claim 6 or 7, wherein the at least three arms (25.i) are pivotably mounted to the carriage on a position on or near to the front end of the carriage.

9. The system according to any one of claims 6-8, wherein the first biasing system comprises tension springs (31.i) wherein each tension spring is associated with one arm and extends between the arm (25.i) and a position between a pivoting connection of the arm and the front end (7) of the carriage or a position at the front end of the carriage, wherein the pivoting connection of the arm is arranged for the pivotable connection of the arm to the carriage.

10. The system according to claim 3 or 4 and any one of claims 6-9, wherein the second biasing system (37.i) comprises first push springs (37.i) wherein each first push spring is associated with one arm (25.i) and is located between a pivoting connection of the arm and the rear end (9) of the carriage wherein the pivoting connection of the arm is arranged for the pivotable connection of the arm to the carriage wherein preferably each arm is pivotable around an associated first rotational axis which is at least substantially perpendicular to the axial axis of the guiding device and wherein preferably an angular position is defined as an angle between the axial axis of the guiding device and a straight line through the first rotational axis and a distal end of the engagement member associated with the first rotational axis..

11. The system according to claim 10, wherein the first push spring (37.i) associated with one of the arms is spring loaded if the arm (25.i) is in the first angular position and wherein the push spring is relieved if the angular position of the arm is larger than a fifth angular position wherein the fifth angular position is associated with the third radial position and lays between the first angular position and the second angular position.

12. The system according to claim 11, wherein the fifth angular position lays between the fourth angular position and the first angular position.

13. The system according to claim 5 and any preceding claim 6-12, wherein the third biasing system (39.i) comprises second push springs (39.i) wherein each second push spring is associated with one arm (25.i) and is located between a pivoting connection of the arm and the front end of the carriage wherein the pivoting connection of the arm is arranged for the pivotable connection of the arm to the carriage.

14. The system according to claim 13, wherein the second push spring (39.i) associated with one of the arms is spring loaded if the arm (25.i) is in the third angular position and wherein the push spring is relieved if the angular position of the arm is smaller than a sixth angular position associated with the fourth radial position, wherein the sixth angular position lays between the third angular position and the second angular position.

15. The system according to any preceding claim 6-14, wherein the driving direction extends from the rear end (9) of the device towards the front end (7) of the device.

16. System according to any one of the preceding claims, wherein each of the at least three surface engagement members (21.i) comprises a guiding element (27.i) for assisting in movement of the device along the inner surface of the pipeline.

17. The device according to any one of the preceding claims, wherein the guiding element (27.i) is at least one of a wheel, a skid, and a continuous track transport mechanism, wherein preferably a wheel is rotatable around a second rotational axis which is at least substantially parallel to the first rotational axis of claim 10.

18. The system according to any preceding claim, wherein the guide device (1) is provided with connection means (15) for connection to a traction unit (73) for driving the guide device in at least the driving direction.

19. The system according to claim any preceding claim , wherein the traction unit (73) comprises further surface engagement members (75) arranged for providing traction against the inner surface of the pipeline.

20. The system according to any preceding claims and according to claim 6, wherein the system is arranged to stop and/or reverse the traction if the detection unit (41), in use, detects that at least one arm (25.i) rotates along an angular path extending in a direction from the first angular position towards the second angular position into or beyond the fourth angular position.

21. The system according to any of the preceding claims, wherein the detection unit (41) comprises
a trigger element (43) which is movable mounted to the carriage;
a sensor (45) arranged for being triggered by movement of the trigger element; and
a collection of connector elements (49.i) wherein each surface engagement member (21.i) is mechanically connected to the trigger element by means of one of the connector elements of the collection.

22. The system according to claim 21, wherein the trigger element (43) is arranged for sliding along a path on the carriage from
a non-trigger position, in which the sensor (45) remains untriggered and a trigger position, in which the sensor is triggered by a displacement of the trigger element out of the non-trigger position.

23. The system according to claim 22, wherein each connector element (49.i) is a cable arranged for providing a pulling force on the trigger element (43) for moving the trigger element from the non-trigger position into the trigger position, when at least one of the at least three surface engagement members (21.i) moves into, or beyond, the detection position and into or beyond the fourth angular position as defined in of claim 5.

24. The system according to claims 6 and 23, wherein each connector element (49.i) is a cable arranged for providing a pulling force on the trigger element (43) for moving the trigger element from the non-trigger position into the trigger position, when at least one of the at least three surface engagement members moves into, or beyond, the fourth angular position.

25. The system according to any of the preceding claims 21-24, wherein the sensor (45) is one of
a switch, and
an optical sensor, such as a light sensor or motion sensor.

26. The system according to claim 9, wherein the tension spring (31.i) is one of a helical spring, a solenoid actuator, a magnet, a magnetic pair and elastic fibers.

27. The system according to claim 10, wherein the first push spring (37.i) is one of a compression spring, a compressible elastic material, a magnetic pair, and a solenoid actuator.

28. The system according to claim 13, wherein the second push spring (39.i) is one of a compression spring, a compressible elastic material, a magnetic pair, and a solenoid actuator.

29. The system according to any preceding claim, wherein the carriage comprises an inspection tool (53) for inspecting a physical state of the pipeline.

30. The system according to claim 29, wherein the inspection tool comprise at least one of an ultrasonic transducer (55), a magnetic detector, an eddy current probe, a camera, a heat sensor, a chemical compound detector, a gas detector, a sub-ultrasonic transducer, a humidity sensor, and an electromagnetic acoustic transducer.

31. The system according to any preceding claim, wherein the at least three surface engagement members are circumferentially spaced from each other such as to form a Cₙ symmetry group, wherein n is an integer and at least three.

32. The system according to claim 31, wherein the at least three surface engagement members (21.i) comprise each two surface engagement members.

33. The system according to any preceding claim, wherein the system is provided with a support cable (93), wherein the support cable is arranged, in use, to extend away from the guide device against the driving direction of the device wherein the support cable is arranged for at least one of
retrieval of a pipeline vehicle assembly comprising the guide device thereby,
data communication with the pipeline vehicle assembly, and
providing electrical energy to the pipeline vehicle.

34. The system according to any of the preceding claims, wherein the system comprises an electronics unit (81), wherein the electronics unit comprising an electronic support system arranged for at least one of
sustaining,
supporting, and
controlling electrical systems present on the pipeline vehicle assembly.

35. The system according to any preceding claim, comprising a cable connection unit (91) for connecting a support cable (93) thereto, wherein the support cable is arranged for at least one of
retrieval of a pipeline vehicle assembly comprising the guide unit thereby,
data communication with the pipeline vehicle assembly, and
providing electrical energy to the pipeline vehicle.

36. The system according to claim 35 wherein the cable (93) is connected to the system on or near a rear end of the system wherein a direction from the rear end (9) of the system towards the front end (7) of the system is the driving direction of the system.

37. A method of preventing entrapment of a pipeline vehicle in a pipeline infrastructure defining
a first pipeline section (A) having a first diameter, and
a second pipeline section (B) having a second diameter greater than the first diameter, the second pipeline section being connected to the first pipeline section,
wherein the method comprises the steps of:
providing the pipeline vehicle system with a system according to any of the preceding claims;
introducing the system into the first pipeline section, such that the at least three surface engagement members are in between the first retracted radial position and the detection radial position;
moving the system in the driving direction towards the second pipeline section;
causing at least one member (21.i) of the at least three surface engagement members to move into or beyond the detection radial position when the guide device reaches the second pipeline section (B)
detecting the movement of the at least one member of the at least three surface engagement members into or beyond the detection radial position; and
stopping the movement of the system.

38. The method according to claim 37, wherein stopping the pipeline vehicle comprises deactivating the traction unit (73) as defined in any claim 1-36.

39. The method according to claim 37 or 38, wherein detecting movement into or beyond the detection radial position generates a warning message/signal.

40. The method according to claim 37, 38 or 39, wherein detecting of movement into or beyond the detection radial position reverses movement of the guide device in a second direction of movement opposite to the driving direction.

## Patentansprüche

1. System zur Bewegung durch eine Pipeline in Antriebsrichtung, umfassend eine Führungsvorrichtung (1), wobei die Führungsvorrichtung Folgendes umfasst:
einen Wagen (3), der eine Längserstreckung zwischen einem vorderen Ende (7) des Wagens und einem hinteren Ende (9) des Wagens definiert;
mindestens drei Oberflächeneingriffselemente (21.i), die an dem Wagen montiert sind; und
eine Detektionseinheit (41), die an dem Wagen angeordnet ist;
wobei jedes der mindestens drei Oberflächeneingriffselemente (21.i) angeordnet ist, um zwischen einer ersten eingezogenen radialen Position, in der das Eingriffselement einen ersten radialen Abstand zu einer axialen Achse der Führungsvorrichtung hat, und einer ausgezogenen radialen Position unabhängig beweglich zu sein, wobei das Eingriffselement einen maximalen radialen Abstand zur axialen Achse der Führungsvorrichtung hat und wobei der erste radiale Abstand kleiner als der maximale radiale Abstand ist und ein erster minimaler Abstand sein kann,
wobei die Vorrichtung weiter ein erstes Vorspannungssystem (31.i) zum Vorspannen jedes der mindestens drei Oberflächeneingriffselemente von der ersten eingezogenen radialen Position, in Richtung der ausgezogenen radialen Position umfasst, **dadurch gekennzeichnet, dass** die mindestens drei Oberflächeneingriffselemente (21.i) zum Stützen und Führen des Wagens entlang einer Innenfläche einer Pipeline in mindestens der Antriebsrichtung angeordnet sind, die sich vom hinteren Ende zum vorderen Ende der Führungsvorrichtung erstreckt,
wobei die Detektionseinheit (41) angeordnet ist, um ein Detektionssignal zu erkennen und zu senden, wenn sich mindestens ein Element der mindestens drei Oberflächeneingriffselemente in Richtung und entlang eines Wegs bewegt, der sich von der ersten eingezogenen radialen Position zu der ausgezogenen Position, oder darüber hinaus, erstreckt, eine Detektionsposition, die zwischen der ersten eingezogenen radialen Position und der ausgezogenen radialen Position liegt, wobei das System mit einer Zugeinheit (73) zum Antreiben der Führungsvorrichtung in mindestens der Antriebsrichtung versehen ist, wobei vorzugsweise die Zugeinheit angeordnet ist, um Detektionssignal zu empfangen, und das System angeordnet ist, um die Zugeinheit anzuhalten und/oder umzukehren, wenn die Detektionseinheit, im Gebrauch, detektiert, dass sich mindestens ein Element der mindestens drei Oberflächeneingriffselemente in der Richtung und entlang des Weges bewegt, der sich von der ersten eingezogenen radialen Position in Richtung der ausgezogenen radialen Position in die radiale Detektionsposition, oder darüber hinaus, erstreckt.

2. System nach Anspruch 1, wobei das erste Vorspannungssystem (31.i) weiter angeordnet ist, um jedes der mindestens drei Oberflächeneingriffselemente (21.i) aus der ausgezogenen radialen Position in Richtung einer zweiten eingezogenen radialen Position vorzuspannen, wenn das Eingriffselement die ausgezogene radiale Position erreicht, wobei das Eingriffselement in der zweiten eingezogenen radialen Position einen radialen Abstand zur axialen Achse der Führungsvorrichtung hat, der kleiner als der maximale radiale Abstand ist und ein zweiter minimaler Abstand sein kann.

3. System nach Anspruch 1 oder 2, wobei die Führungsvorrichtung weiter mit einem zweiten Vorspannungssystem (37.i) versehen ist, das angeordnet ist, um jedes der mindestens drei Oberflächeneingriffselemente aus der ersten eingezogenen radialen Position in Richtung der ausgezogenen radialen Position vorzuspannen, bis sie eine dritte radiale Position erreicht, die zwischen der ersten eingezogenen radialen Position und der ausgezogenen radialen Position liegt.

4. System nach Anspruch 3, wobei die dritte radiale Position zwischen der ersten radialen Position und der Detektionsposition liegt.

5. System nach einem der vorhergehenden Ansprüche, wobei die Führungsvorrichtung weiter mit einem dritten Vorspannungssystem (39.i) versehen ist, das angeordnet ist, um jedes der mindestens drei Oberflächeneingriffselemente aus der zweiten eingezogenen radialen Position in Richtung der ausgezogenen radialen Position vorzuspannen, bis sie eine vierte radiale Position erreicht, die zwischen der zweiten eingezogenen radialen Position und der ausgezogenen radialen Position liegt.

6. System nach einem der vorhergehenden Ansprüche, wobei die Oberflächeneingriffselemente (21.i) jeweils an voneinander verschiedenen Armen (25.i) montiert sind, wobei jeder Arm schwenkbar mit dem Wagen von einer ersten Winkelposition, die der ersten eingezogenen radialen Position zugeordnet ist, bis zu der zweiten Winkelposition, die der ausgezogenen radialen Position zugeordnet ist, und von der zweiten Winkelposition bis zu einer dritten Winkelposition, die der zweiten eingezogenen radialen Position zugeordnet ist, verbunden ist, wobei eine vierte Winkelposition der radialen Detektionsposition zugeordnet ist und zwischen der ersten und der zweiten Winkelposition liegt, wobei der Arm (25.i) um eine Drehachse schwenkbar ist, die zumindest im Wesentlichen senkrecht zu der axialen Achse ist, wobei der Arm in der ersten Winkelposition zum hinteren Ende der Vorrichtung und der Arm in der dritten Winkelposition in Richtung des vorderen Endes der Vorrichtung gerichtet ist.

7. System nach Anspruch 6, wobei der Arm (25.i) in der zweiten Winkelposition im Wesentlichen senkrecht zur axialen Achse der Vorrichtung gerichtet ist.

8. System nach Anspruch 6 oder 7, wobei die mindestens drei Arme (25.i) an einer Position am oder nahe dem vorderen Ende des Wagens schwenkbar am Wagen montiert sind.

9. System nach einem der Ansprüche 6 bis 8, wobei das erste Vorspannungssystem Zugfedern (31.i) umfasst, wobei jede Zugfeder einem Arm zugeordnet ist und sich zwischen dem Arm (25.i) und einer Position zwischen einer Schwenkverbindung des Arms und des vorderen Endes (7) des Wagens oder einer Position am vorderen Ende des Wagens erstreckt, wobei die Schwenkverbindung des Arms zur Schwenkverbindung des Arms mit dem Wagen angeordnet ist.

10. System nach Anspruch 3 oder 4 und einem der Ansprüche 6 bis 9, wobei das zweite Vorspannungssystem (37.i) erste Druckfedern (37.i) umfasst, wobei jede erste Druckfeder einem Arm (25.i) zugeordnet ist und sich zwischen einer Schwenkverbindung des Arms und dem hinteren Ende (9) des Wagens befindet, wobei die Schwenkverbindung des Arms zur Schwenkverbindung des Arms mit dem Wagen angeordnet ist, wobei vorzugsweise jeder Arm um eine erste zugeordnete Drehachse schwenkbar ist, die mindestens im Wesentlichen senkrecht zu der axialen Achse der Führungsvorrichtung ist und wobei vorzugsweise eine Winkelposition als ein Winkel zwischen der axialen Achse der Führungsvorrichtung und einer geraden Linie durch die erste Drehachse und ein distales Ende vom Eingriffselement definiert ist, das der ersten Drehachse zugeordnet ist.

11. System nach Anspruch 10, wobei die erste Druckfeder (37.i), die einem der Arme zugeordnet ist, federbelastet ist, wenn sich der Arm (25.i) in der ersten Winkelposition befindet, und wobei die Druckfeder entlastet wird, wenn die Winkelposition des Arms größer als eine fünfte Winkelposition ist, wobei die fünfte Winkelposition der dritten radialen Position zugeordnet ist und zwischen der ersten Winkelposition und der zweiten Winkelposition liegt.

12. System nach Anspruch 11, wobei die fünfte Winkelposition zwischen der vierten Winkelposition und der ersten Winkelposition liegt.

13. System nach Anspruch 5 und einem der vorhergehenden Ansprüche 6-12, wobei das dritte Vorspannungssystem (39.i) zweite Druckfedern (39.i) umfasst, wobei jede zweite Druckfeder einem Arm (25.i) zugeordnet ist und zwischen einer Schwenkverbindung des Arms und dem vorderen Ende des Wagens angeordnet ist, wobei die Schwenkverbindung des Arms zur Schwenkverbindung des Arms mit dem Wagen angeordnet ist.

14. System nach Anspruch 13, wobei die zweite Druckfeder (39.i), die einem der Arme zugeordnet ist, federbelastet ist, wenn sich der Arm (25.i) in der dritten Winkelposition befindet, und wobei die Druckfeder entlastet wird, wenn die Winkelposition Arms kleiner als eine sechste Winkelposition ist, die der vierten radialen Position zugeordnet ist, wobei die sechste Winkelposition zwischen der dritten Winkelposition und der zweiten Winkelposition liegt.

15. System nach einem der vorhergehenden Ansprüche 6 bis 14, wobei sich die Antriebsrichtung vom hinteren Ende (9) der Vorrichtung zum vorderen Ende (7) der Vorrichtung erstreckt.

16. System nach einem der vorhergehenden Ansprüche, wobei jedes der mindestens drei Oberflächeneingriffselemente (21.i) ein Führungselement (27.i) zur Unterstützung der Bewegung der Vorrichtung entlang der Innenfläche der Pipeline umfasst.

17. Vorrichtung nach einem der vorhergehenden Ansprüche, wobei das Führungselement (27.i) mindestens ein Rad, ein Gleitelement oder ein kontinuierlicher Spurtransportmechanismus ist, wobei vorzugsweise ein Rad um eine zweite Drehachse drehbar ist, die mindestens im Wesentlichen parallel zur ersten Drehachse nach Anspruch 10 ist.

18. System nach einem der vorhergehenden Ansprüche, wobei die Führungsvorrichtung (1) mit Verbindungsmittel (15) zum Verbinden mit einer Zugeinheit (73) zum Antreiben der Führungsvorrichtung in mindestens der Antriebsrichtung versehen ist.

19. System nach einem der vorhergehenden Ansprüche, wobei die Zugeinheit (73) weitere Oberflächeneingriffselemente (75) umfasst, die so angeordnet sind, dass sie eine Zugkraft gegen die innere Oberfläche der Pipeline bereitstellen.

20. System nach einem der vorhergehenden Ansprüche und nach Anspruch 6, wobei das System angeordnet ist, um die Zugkraft anzuhalten und/oder umzukehren, wenn die Detektionseinheit (41), im Gebrauch, erkennt, dass sich mindestens ein Arm (25.i) entlang eines Winkelpfades dreht, der sich in einer Richtung von der ersten Winkelposition zu der zweiten Winkelposition in oder über die vierte Winkelposition hinaus erstreckt.

21. System nach einem der vorhergehenden Ansprüche, wobei die Detektionseinheit (41) Folgendes umfasst
ein Auslöseelement (43), das an dem Wagen beweglich montiert ist;
ein Sensor (45), der durch Bewegung des Auslöseelements ausgelöst wird; und
eine Sammlung von Verbindungselementen (49.i), wobei jedes Oberflächeneingriffselement (21.i) mittels eines der Verbindungselemente der Sammlung mit dem Auslöseelement mechanisch verbunden ist.

22. System nach Anspruch 21, bei dem das Auslöseelement (43) angeordnet ist, um entlang eines Weges auf dem Wagen zu gleiten von
einer Nicht-Auslöseposition, in der der Sensor (45) nicht ausgelöst wird, und eine Auslöseposition, in der der Sensor durch ein Verschieben des Auslöseelements aus der Nicht-Auslöseposition ausgelöst wird.

23. System nach Anspruch 22, wobei jedes Verbindungselement (49.1) ein Kabel ist, das so angeordnet ist, dass es eine Zugkraft auf das Auslöseelement (43) zum Bewegen des Auslöseelements aus der Nicht-Auslöseposition in die Auslöseposition bereitstellt, wenn sich mindestens eines der mindestens drei Oberflächeneingriffselemente (21.i) in die Detektionsposition oder darüber hinaus oder in die vierte Winkelposition oder darüber hinaus bewegt, wie in Anspruch 5 definiert.

24. System nach den Ansprüchen 6 und 23, wobei jedes Verbindungselement (49.i) ein Kabel ist, das angeordnet ist, um eine Zugkraft auf das Auslöseelement (43) zum Bewegen des Auslöseelements aus der Nicht-Auslöseposition in die Auslöseposition bereitzustellen, wenn sich mindestens eines der mindestens drei Oberflächeneingriffselemente in die vierte Winkelposition oder darüber hinaus bewegt.

25. System nach einem der vorhergehenden Ansprüche 21 bis 24, wobei der Sensor (45) einer von Folgenden ist
ein Schalter und
ein optischer Sensor, zum Beispiel ein Lichtsensor oder ein Bewegungssensor.

26. System nach Anspruch 9, wobei die Zugfeder (31.i) eine von folgenden ist: Schraubenfeder, ein Solenoidaktuator, ein Magnet, ein Magnetpaar oder elastische Fasern.

27. System nach Anspruch 10, wobei die erste Druckfeder (37.i) eine von folgenden ist: eine Druckfeder, ein komprimierbares elastisches Material, ein Magnetpaar oder ein Solenoidaktuator.

28. System nach Anspruch 13, wobei die zweite Druckfeder (39.i) eine von folgenden ist: Druckfeder, ein komprimierbares elastisches Material, ein Magnetpaar oder ein Solenoidaktuator.

29. System nach einem der vorhergehenden Ansprüche, wobei der Wagen ein Inspektionswerkzeug (53) zum Inspizieren eines physikalischen Zustands der Pipeline aufweist.

30. System nach Anspruch 29, wobei das Inspektionswerkzeug mindestens einen Ultraschallwandler (55), einen Magnetdetektor, eine Wirbelstromsonde, eine Kamera, einen Wärmesensor, einen chemischen Verbindungsdetektor, einen Gasdetektor und einen Sub-Ultraschallwandler, einen Feuchtigkeitssensor oder einen elektromagnetischen akustischen Wandler umfasst.

31. System nach einem der vorhergehenden Ansprüche, bei dem die mindestens drei Oberflächeneingriffselemente umlaufend voneinander entfernt sind, um eine Symmetriegruppe Cₙ zu bilden, wobei n eine ganze Zahl und mindestens drei ist.

32. System nach Anspruch 31, wobei die mindestens drei Oberflächeneingriffselemente (21.i) jeweils zwei Oberflächeneingriffselemente umfassen.

33. System nach einem der vorhergehenden Ansprüche, wobei das System mit einem Tragseil (93) versehen ist, wobei das Tragseil, im Gebrauch, so angeordnet ist, dass es sich von der Führungsvorrichtung gegen die Antriebsrichtung der Vorrichtung erstreckt, in der das Tragseil angeordnet ist, für mindestens eines vom Folgenden
Wiederherstellen einer Pipeline-Fahrzeugbaugruppe mit der Führungsvorrichtung, damit,
Datenkommunikation mit der Pipeline-Fahrzeugbaugruppe und
Bereitstellen elektrischer Energie für das Pipeline-Fahrzeug.

34. System nach einem der vorhergehenden Ansprüche, wobei das System eine Elektronikeinheit (81) umfasst, wobei die Elektronikeinheit ein elektronisches Unterstützungssystem umfasst, das für mindestens eines von Folgendem angeordnet ist
Aufrechterhalten,
Unterstützen und
Steuern elektrischer Systeme in der Pipeline-Fahrzeugbaugruppe.

35. System nach einem der vorhergehenden Ansprüche, umfassend eine Kabelverbindungseinheit (91) zum Anschließen eines Tragseils (93) daran, wobei das Tragseil für mindestens eines von Folgendem angeordnet ist
Wiederherstellen einer Pipeline-Fahrzeugbaugruppe mit der Führungseinheit, damit,
Datenkommunikation mit der Pipeline-Fahrzeugbaugruppe und
Bereitstellen elektrischer Energie für das Pipeline-Fahrzeug.

36. System nach Anspruch 35, wobei das Seil (93) mit dem System an oder nahe einem hinteren Ende des Systems verbunden ist, wobei eine Richtung vom hinteren Ende (9) des Systems zum vorderen Ende (7) des Systems die Antriebsrichtung des Systems ist.

37. Ein Verfahren zum Verhindern des Einklemmens eines Pipeline-Fahrzeugs in einer Pipeline-Infrastruktur, die
einen ersten Pipelinesabschnitt (A) mit einem ersten Durchmesser und
einen zweiten Pipelinesabschnitt (B) mit einem zweiten Durchmesser definiert, der größer als der erste Durchmesser ist, wobei der zweite Pipelinesabschnitt mit dem ersten Pipelinesabschnitt verbunden ist,
wobei das Verfahren die folgenden Schritte umfasst:
Versehen des Pipeline-Fahrzeugsystems mit einem System nach einem der vorhergehenden Ansprüche;
Einführen des Systems in den ersten Pipelinesabschnitt, so dass sich die mindestens drei Oberflächeneingriffselemente zwischen der ersten eingezogenen radialen Position und der radialen Detektionsposition befinden;
Bewegen des Systems in Antriebsrichtung in Richtung des zweiten Pipelinesabschnitts;
Bewirken, dass sich mindestens ein Element (21.i) der mindestens drei Oberflächeneingriffselemente in die radiale Detektionsposition bewegt oder diese überschreitet, wenn die Führungsvorrichtung den zweiten Pipelinesabschnitt (B) erreicht;
Erkennen der Bewegung des mindestens einen Elements der mindestens drei Oberflächeneingriffselemente in die radiale Detektionsposition oder über diese hinaus; und
Anhalten der Bewegung des Systems.

38. Verfahren nach Anspruch 37, wobei das Anhalten des Pipeline-Fahrzeugs das Deaktivieren der Zugeinheit (73) nach einem der Ansprüche 1 bis 36 umfasst.

39. Verfahren nach Anspruch 37 oder 38, wobei das Erkennen einer Bewegung in radialer Detektionsposition oder darüber hinaus eine Warnmeldung/ein Signal erzeugt.

40. Verfahren nach Anspruch 37, 38 oder 39, wobei das Erkennen einer Bewegung in der radialen Detektionsposition oder darüber hinaus die Bewegung der Führungsvorrichtung in einer zweiten Bewegungsrichtung entgegengesetzt zur Antriebsrichtung umkehrt.

## Revendications

1. Système de déplacement à travers un pipeline dans une direction d'entraînement comprenant un dispositif de guide (1), dans lequel le dispositif de guide comprend :
un chariot (3) définissant une étendue longitudinale entre une extrémité avant (7) du chariot et une extrémité arrière (9) du chariot ;
au moins trois éléments de mise en prise de surface (21.i) montés sur le chariot ; et
une unité de détection (41) agencée sur le chariot ;
dans lequel chacun des au moins trois éléments de mise en prise de surface (21.i) sont agencés pour être mobiles indépendamment entre une première position radiale rétractée dans laquelle l'élément de mise en prise a une première distance radiale par rapport à un axe axial du dispositif de guide, et une position radiale étendue dans laquelle l'élément de mise en prise a une distance radiale maximale par rapport à l'axe axial du dispositif de guidage et dans lequel la première distance radiale est inférieure à la distance radiale maximale et peut être une première distance minimale,
dans lequel le dispositif comprend en outre un premier système de sollicitation (31.i) pour solliciter chacun des au moins trois éléments de mise en prise de surface, de la première position radiale rétractée vers la position radiale étendue, **caractérisé en ce que** les au moins trois éléments de mise en prise de surface (21.i) sont agencés pour supporter et guider le chariot le long d'une surface interne d'un pipeline dans au moins la direction d'entraînement qui s'étend de l'extrémité arrière vers l'extrémité avant du dispositif de guide,
dans lequel l'unité de détection (41) est agencée pour détecter et envoyer un signal de détection, lorsqu'au moins un élément des au moins trois éléments de mise en prise de surface se déplace dans la direction de et le long d'une trajectoire s'étendant de la première position radiale rétractée à la position radiale étendue dans ou au-delà d'une position de détection qui se trouve entre la première position radiale rétractée et la position radiale étendue, dans lequel le système est prévu avec une unité de traction (73) pour entraîner le dispositif de guide dans au moins la direction d'entraînement, dans lequel de préférence l'unité de traction est agencée pour recevoir le signal de détection et dans lequel le système est agencé pour arrêter et/ou inverser l'unité de traction si l'unité de détection, à l'usage, détecte qu'au moins un élément des au moins trois éléments de mise en prise de surface se déplace dans la direction de et le long de la trajectoire s'étendant à partir de la première position radiale rétractée vers la position radiale étendue dans ou au-delà de la position radiale de détection.

2. Système selon la revendication 1, dans lequel le premier système de sollicitation (31.i) est en outre agencé pour solliciter chacun des au moins trois éléments de mise en prise de surface (21.i) de la position radiale étendue vers une deuxième position radiale rétractée si l'élément de mise en prise atteint la position radiale étendue, dans lequel dans la deuxième position radiale rétractée, l'élément de mise en prise a une distance radiale par rapport à l'axe axial du dispositif de guide qui est inférieure à la distance radiale maximale et peut être une seconde distance minimale.

3. Système selon la revendication 1 ou 2, dans lequel le dispositif de guide est en outre prévu avec un deuxième système de sollicitation (37.i) agencé pour solliciter chacun des au moins trois éléments de mise en prise de surface de la première position radiale rétractée vers la position radiale étendue jusqu'à ce qu'il atteigne une troisième position radiale se trouvant entre la première position radiale rétractée et la position radiale étendue.

4. Système selon la revendication 3, dans lequel la troisième position radiale se trouve entre la première position radiale et la position de détection.

5. Système selon l'une quelconque des revendications précédentes, dans lequel le dispositif de guide est en outre prévu avec un troisième système de sollicitation (39.i) agencé pour solliciter chacun des au moins trois éléments de mise en prise de surface de la deuxième position radiale rétractée vers la position radiale étendue jusqu'à ce qu'il atteigne une quatrième position radiale se trouvant entre la deuxième position radiale rétractée et la position radiale étendue.

6. Système selon l'une quelconque des revendications précédentes, dans lequel les éléments de mise en prise de surface (21.i) sont montés sur des bras (25.i) mutuellement différents respectivement, dans lequel chaque bras est raccordé de manière pivotante au chariot d'une première position angulaire associée avec la première position radiale rétractée à une deuxième position angulaire associée avec la position radiale étendue et de la deuxième position angulaire vers une troisième position angulaire associée à la deuxième position radiale rétractée, dans lequel une quatrième position angulaire est associée à la position radiale de détection et se trouve entre les première et deuxième positions angulaires, dans lequel le bras (25.i) peut pivoter autour d'un axe de rotation qui est au moins sensiblement perpendiculaire à l'axe axial, dans lequel dans la première position angulaire, le bras est dirigé vers l'extrémité arrière du dispositif et dans la troisième position angulaire, le bras est dirigé vers l'extrémité avant du dispositif.

7. Système selon la revendication 6, dans lequel dans la deuxième position angulaire, le bras (25.i) est dirigé sensiblement perpendiculairement à l'axe axial du dispositif.

8. Système selon la revendication 6 ou 7, dans lequel les au moins trois bras (25.i) sont montés de manière pivotante sur le chariot dans une position sur ou à proximité de l'extrémité avant du chariot.

9. Système selon l'une quelconque des revendications 6 à 8, dans lequel le premier système de sollicitation comprend des ressorts de tension (31.i) dans lequel chaque ressort de tension est associé à un bras et s'étend entre le bras (25. i) et une position entre un raccordement pivotant du bras et l'extrémité avant (7) du chariot ou une position au niveau de l'extrémité avant du chariot, dans lequel le raccordement pivotant du bras est agencé pour le raccordement pouvant pivoter, du bras au chariot.

10. Système selon la revendication 3 ou 4 et l'une quelconque des revendications 6 à 9, dans lequel le deuxième système de sollicitation (37.i) comprend des premiers ressorts de poussée (37.i), dans lequel chaque premier ressort de poussée est associé à un bras (25.i) et est positionné entre un raccordement pivotant du bras et l'extrémité arrière (9) du chariot, dans lequel le raccordement pivotant du bras est agencé pour le raccordement pouvant pivoter du bras au chariot, dans lequel de préférence chaque bras peut pivoter autour d'un premier axe de rotation associé qui est au moins sensiblement perpendiculaire à l'axe axial du dispositif de guide et dans lequel de préférence une position angulaire est définie sous la forme d'un angle entre l'axe axial du dispositif de guide et une ligne droite à travers le premier axe de rotation et une extrémité distale de l'élément de mise en prise associé au premier axe de rotation.

11. Système selon la revendication 10, dans lequel le premier ressort de poussée (37.i) associé à l'un des bras est sollicité élastiquement si le bras (25.i) est dans la première position angulaire et dans lequel le ressort de poussée est relâché si la position angulaire du bras est supérieure à une cinquième position angulaire, dans lequel la cinquième position angulaire est associée à la troisième position radiale et se trouve entre la première position angulaire et la deuxième position angulaire.

12. Système selon la revendication 11, dans lequel la cinquième position angulaire se trouve entre la quatrième position angulaire et la première position angulaire.

13. Système selon la revendication 5 et l'une quelconque des revendications 6 à 12, dans lequel le troisième système de sollicitation (39.i) comprend des seconds ressorts de poussée (39.i) dans lequel chaque second ressort de poussée est associé avec un bras (25.i) et est positionné entre un raccordement pivotant du bras et l'extrémité avant du chariot, dans lequel le raccordement pivotant du bras est agencé pour le raccordement pouvant pivoter, du bras au chariot.

14. Système selon la revendication 13, dans lequel le second ressort de poussée (39.i) associé avec l'un des bras est chargé élastiquement si le bras (25.i) est dans la troisième position angulaire et dans lequel le ressort de poussée est relâché si la position angulaire du bras est inférieure à une sixième position angulaire associée avec la quatrième position radiale, dans lequel la sixième position angulaire se trouve entre la troisième position angulaire et la deuxième position angulaire.

15. Système selon l'une quelconque des revendications 6 à 14, dans lequel la direction d'entraînement s'étend de l'extrémité arrière (9) du dispositif vers l'extrémité avant (7) du dispositif.

16. Système selon l'une quelconque des revendications précédentes, dans lequel chacun des au moins trois éléments de mise en prise de surface (21.i) comprend un élément de guidage (27.i) pour assister le mouvement du dispositif le long de la surface interne du pipeline.

17. Système selon l'une quelconque des revendications précédentes, dans lequel l'élément de guidage (27.i) est au moins l'un parmi une roue, un patin et un mécanisme de transport à chenille continue, dans lequel de préférence une roue peut tourner autour d'un second axe de rotation qui est au moins sensiblement parallèle au premier axe de rotation selon la revendication 10.

18. Système selon l'une quelconque des revendications précédentes, dans lequel le dispositif de guide (1) est prévu avec un moyen de raccordement (15) pour le raccordement à une unité de transport (73) pour entraîner le dispositif de guide dans au moins la direction d'entraînement.

19. Système selon l'une quelconque des revendications précédentes, dans lequel l'unité de traction (73) comprend d'autres éléments de mise en prise de surface (75) agencés pour fournir la traction contre la surface interne du pipeline.

20. Système selon l'une quelconque des revendications précédentes et selon la revendication 6, dans lequel le système est agencé pour arrêter et/ou inverser la traction si l'unité de détection (41), à l'usage, détecte qu'au moins un bras (25.i) tourne le long d'une trajectoire angulaire s'étendant dans une direction allant de la première position angulaire vers la deuxième position angulaire dans ou au-delà de la quatrième position angulaire.

21. Système selon l'une quelconque des revendications précédentes, dans lequel l'unité de détection (41) comprend :
un élément de déclencheur (43) qui est monté de manière mobile sur le chariot ;
un capteur (45) agencé pour être déclenché par le mouvement de l'élément de déclencheur ; et
un ensemble d'éléments de connecteur (49.i), dans lequel chaque élément de mise en prise de surface (21.i) est mécaniquement raccordé à l'élément de déclencheur au moyen de l'un des éléments de connecteur de l'ensemble.

22. Système selon la revendication 21, dans lequel l'élément de déclencheur (43) est agencé pour coulisser le long d'une trajectoire sur le chariot à partir :
d'une position sans déclencheur, dans laquelle le capteur (45) reste non déclenché et une position de déclencheur, dans laquelle le capteur est déclenché par un déplacement de l'élément de déclencheur hors de la position sans déclencheur.

23. Système selon la revendication 22, dans lequel chaque élément de connecteur (49.i) est un câble agencé pour fournir une force de traction sur l'élément de déclencheur (43) pour déplacer l'élément de déclencheur de la position sans déclencheur dans la position de déclencheur, lorsqu'au moins l'un des au moins trois éléments de mise en prise de surface (21.i) se déplace dans ou au-delà de la position de détection et dans ou au-delà de la quatrième position angulaire selon la revendication 5.

24. Système selon les revendications 6 et 23, dans lequel chaque élément de connecteur (49.i) est un câble agencé pour fournir une force de traction sur l'élément de déclencheur (43) pour déplacer l'élément de déclencheur de la position sans déclencheur dans la position de déclencheur, lorsqu'au moins l'un des au moins trois éléments de mise en prise de surface se déplace dans, ou au-delà, de la quatrième position angulaire.

25. Système selon l'une quelconque des revendications 21 à 24, dans lequel le capteur (45) est l'un parmi :
un commutateur, et
un capteur optique, tel qu'un capteur de lumière ou un capteur de mouvement.

26. Système selon la revendication 9, dans lequel le ressort de tension (31.i) est l'un parmi un ressort hélicoïdal, un actionneur de solénoïde, un aimant, une paire magnétique et des fibres élastiques.

27. Système selon la revendication 10, dans lequel le premier ressort de poussée (37.i) est l'un parmi un ressort de compression, un matériau élastique compressible, une paire magnétique, et un actionneur de solénoïde.

28. Système selon la revendication 13, dans lequel le second ressort de poussée (39.i) est l'un parmi un ressort de compression, un élément élastique compressible, une paire magnétique et un actionneur de solénoïde.

29. Système selon l'une quelconque des revendications précédentes, dans lequel le chariot comprend un outil de contrôle (53) pour contrôler un état physique du pipeline.

30. Système selon la revendication 29, dans lequel l'outil de contrôle comprend au moins l'un parmi un transducteur ultrasonore (55), un détecteur magnétique, une sonde de courant de Foucault, une caméra, un capteur thermique, un détecteur de composé chimique, un détecteur de gaz, un transducteur sub-ultrasonique, un capteur d'humidité et un transducteur acoustique électromagnétique.

31. Système selon l'une quelconque des revendications précédentes, dans lequel les au moins trois éléments de mise en prise de surface sont circonférentiellement espacés les uns des autres afin de former un groupe de symétrie Cₙ, dans lequel n est un nombre entier et d'au moins trois.

32. Système selon la revendication 31, dans lequel les au moins trois éléments de mise en prise de surface (21.i) comprennent chacun deux éléments de mise en prise de surface.

33. Système selon l'une quelconque des revendications précédentes, dans lequel le système est prévu avec un câble de support (93), dans lequel le câble de support est agencé, à l'usage, pour s'étendre à distance du dispositif de guide contre la direction d'entraînement du dispositif, dans lequel le câble de support est agencé pour au moins l'une parmi :
la récupération d'un ensemble de véhicule de pipeline comprenant le dispositif de guide,
la communication de données avec l'ensemble de véhicule de pipeline ; et
la fourniture de l'énergie électrique au véhicule de pipeline.

34. Système selon l'une quelconque des revendications précédentes, dans lequel le système comprend une unité électronique (81), dans lequel l'unité électronique comprend un système de support électronique agencé pour au moins une action parmi :
soutenir,
supporter, et
commander les systèmes électriques présents sur l'ensemble de véhicule de pipeline.

35. Système selon l'une quelconque des revendications précédentes, comprenant une unité de raccordement de câble (91) pour y raccorder un câble de support (93), dans lequel le support de câble est agencé pour au moins l'une parmi :
la récupération d'un ensemble de véhicule de pipeline comprenant l'unité de guide,
la communication de données avec l'ensemble de véhicule de pipeline, et
la fourniture de l'énergie électrique au véhicule de pipeline.

36. Système selon la revendication 35, dans lequel le câble (93) est raccordé au système sur ou à proximité d'une extrémité arrière du système dans lequel une direction de l'extrémité arrière (9) du système vers l'extrémité avant (7) du système est la direction d'entraînement du système.

37. Procédé pour empêcher le piégeage d'un véhicule de pipeline dans une infrastructure de pipeline définissant :
une première section de pipeline (A) ayant un premier diamètre, et
une seconde section de pipeline (B) ayant un second diamètre supérieur au premier diamètre, la seconde section de pipeline étant raccordée à la première section de pipeline,
dans lequel le procédé comprend les étapes suivantes :
prévoir le système de véhicule de pipeline avec un système selon l'une quelconque des revendications précédentes ;
introduire le système dans la première section de pipeline, de sorte que les au moins trois éléments de mise en prise de surface sont entre la première position radiale rétractée et la position radiale de détection ;
déplacer le système dans la direction d'entraînement vers la seconde section de pipeline ;
amener au moins un élément (21.i) des au moins trois éléments de mise en prise de surface à se déplacer dans ou au-delà de la position radiale de détection lorsque le dispositif de guidage atteint la seconde section de pipeline (B),
détecter le mouvement du au moins un élément des au moins trois éléments de mise en prise de surface dans ou au-delà de la position radiale de détection ; et
arrêter le mouvement du système.

38. Procédé selon la revendication 37, dans lequel l'arrêt du véhicule de pipeline comprend la désactivation de l'unité de traction (73) selon l'une quelconque des revendications 1 à 36.

39. Procédé selon la revendication 37 ou 38, dans lequel la détection du mouvement dans ou au-delà de la position radiale de détection génère un message/signal d'avertissement.

40. Système selon la revendication 37, 38 ou 39, dans lequel la détection du mouvement dans ou au-delà de la position radiale de détection inverse le mouvement du dispositif de guide dans une seconde direction de mouvement opposée à la direction d'entraînement.
